# EUROPÄISCHE PATENTSCHRIFT

(11) **EP 0 654 396 B1**
(45) Veröffentlichungstag und Bekanntmachung des Hinweises auf die Patenterteilung: **28.05.1997**
(21) Anmeldenummer: 94114575.7
(22) Anmeldetag: 16.09.1994
(51) Int. Cl.: B62D 25/20, B60P 3/04

(54) **Bodenelement**
Floor element
Elément de plancher

(30) Priorität: 18.11.1993 DE 9317575 U
(43) Veröffentlichungstag der Anmeldung: 24.05.1995
(73) Patentinhaber: Bannas, Peter, D-49565 Bramsche (DE)
(72) Erfinder: Bannas, Peter, D-49565 Bramsche (DE)
(74) Vertreter: Busse & Busse Patentanwälte

(56) Entgegenhaltungen:
- DE-U- 8 404 786
- US-A- 5 188 418

## Beschreibung

Die Erfindung betrifft ein Bodenelement mit einer Trittfläche für insbesondere Vieh wie Paarhufer, bei dem aus seiner oberflächig geschlossenen Hauptebene eine Oberflächenprofilierung in Form winklig zueinander angeordneter Profilleisten ausgeprägt ist.

Bei den bekannten Bodenelementen dieser Art, wie sie insbesondere bei Viehtransportern in Verbindung mit den Böden oder Zwischenböden des kastenförmigen Fahrzeugaufbaus beispielsweise als massives Bodenblech mit dreiseitig hochgebogenen Seitenrändern Verwendung finden, umgrenzen die winklig zueinander angeordneten Profilleisten der aus der geschlossenen Hauptebene ausgeprägten Oberflächenprofilierung ihrerseits eine Vielzahl muldenartiger Vertiefungen entsprechend dem vorgesehenen Profilierungsmuster. Wegen der geschlossenen Oberfläche des Elements werden diese Vertiefungen schnell mit Schmutz und Tierexkrementen mehr oder weniger ausgefüllt, wobei auch die Profilleisten selbst verschmutzt und rutschig werden. Die Oberflächenprofilierung der bekannten Bodenelemente kann aus diesem Grunde die Trittsicherheit der Tiere nur unvollkommen unterstützen, zumal sich die jeweils für sich geschlossenen Mulden der Oberflächenprofilierung nur mit Schwierigkeiten und daher in der Regel nicht vollständig nach einem Transportvorgang durch Abspritzen oder Spülen mit einer Reinigungsflüssigkeit wie Wasser säubern lassen. Die bei den bekannten Bodenelementen im Transportbetrieb zu beobachtende mangelhafte Trittsicherheit der Tiere zeigt sich besonders bei Paarhufern wie Schweinen und Rindern in einem mit der Größer der Tiere zunehmenden Ausmaß. Dies hämt damit zusammen, daß bei solchen Paarhufern das gesamte Körpergewicht von der dritten und vierten Zehe der Füße getragen wird, da die anderen Zehen mehr oder weniger rückgebildet sind. Es tritt hierbei sehr leicht der Fall ein, daß die beiden Zehen größerer Tiere bei den herkömmlichen Oberflächenprofilierungen der Bodenelemente keinen sicheren Halt finden.

DE-U-84 04 786 beschreibt ein Bodenelement in einer Ausbildung gemäß dem Oberbegriff des Anspruchs 1, das als Belag für die Ladefläche eines Transportfahrzeugs für Tiere ausgebildet ist, bei dem jeweils spitzwinklig zueinander angeordnete Profilleisten ein W-Profil mit Spülkanälen bilden. Die Spülkanäle vereinfachen zwar die Reinigung des Bodenelementes, während sich jedoch die spitzwinklige Anordnung der Profilleisten in jeder Steggruppe als ungünstig für die Trittsicherheit, insbesondere von Paarhufern, erweist.

Der Erfindung liegt daher die Aufgabe zugrunde, ein Bodenelement mit einer Trittfläche für insbesondere Vieh wie Paarhufer der eingangs angegebenen Art zu schaffen, bei dem durch die Oberflächenprofilierung die Trittsicherheit der Tiere wesentlich verbessert ist und bei Verschmutzung durch ein erleichtertes Säubern der Oberflächenprofilierung vollständig wieder hergestellt werden kann.

Diese Aufgabe wird nach der Erfindung dadurch gelöst, daß jede vollständige Steggruppe drei Profilleisten umfaßt und daß die Profilleisten in jeder Steggruppe rechtwinklig zueinander in der Form eines H-Profils angeordnet sind. Bei dieser Ausgestaltung gewährleistet die rechtwinklige Anordnung der Profilleisten in jeder Steggruppe in der Form eines H-Profils einen sicheren Halt bzw. eine hohe Standfestigkeit der Tiere auf dem Boden-element, die insbesondere auch bei den besonders gefährdeten Paarhufern dadurch gewährleistet ist, daß solche Paarhufer mit ihren tragenden beiden Zehen die Profilleisten beidseits umfassen können, mit anderen Worten, die Profilleiste zwischen die beiden Zehen eingreifen kann, was die Trittsicherheit und Standfestigkeit der Tiere besonders begünstigt. Dadurch, daß außerdem zwischen den aneinandergrenzenden Steggruppen die mit der Hauptebene des Bodenelements fluchtenden Spülkanäle belassen sind, ist im Falle einer Verschmutzung der Oberflächenprofilierung deren vollständige Reinigung leicht möglich, da die Reinigungsflüssigkeit wie Wasser hierbei die Spülkanäle durchströmt und damit die gesamte Oberfläche der Hauptebene des Bodenelements erfaßt. Es verbleiben somit nach einem Reinigungsvorgang keine Schmutznester, wie es bei bekannten Oberflächenprofilierungen mit von den Profilleisten umgrenzten einzelnen muldenartigen Vertiefungen der Fall ist.

Das Bodenelement nach der Erfindung kann überall dort mit Vorteil eingesetzt werden, wo eine Rutschsicherheit der Tiere gefragt ist. Dies ist insbesondere beim Transport der Tiere der Fall. In diesem Zusammenhang wird das erfindungsgemäße Bodenelement insbesondere zur Ausbildung der Böden und Zwischenböden von Viehtransportern verwendet, aber auch für Fahrzeugklappen, die im heruntergeklappten Zustand zum Bei- und Entladen der Tiere verwendet werden, bzw. allgemein für Laufwege einschl. Rampen, auf denen die Tiere zum Fahrzeug hin und von diesem fortbewegt werden.

Das Bodenelement nach der Erfindung kann dabei als selbsttragender Profilkörper ausgebildet sein, der an zumindest einer Seitenfläche eine Profil-ausbildung für eine Verklammerung mit einem gleichartigen profilkörper zur Bildung eines profilkörperverbundes aufweist, der im Einbauzustand beispielsweise in einem Viehtransporter sodann die gesamte Bodenfläche des Grundbodens oder eines oder mehrerer Zwischenböden einnimmt. Dabei empfiehlt es sich, den profilkörper als flachen, vorzugsweise mehrkammerigen Hohlprofilkörper nach Art eines paneels auszubilden, um in dieser Weise im gegenseitigen Verbund die Böden, aber auch Klappen, Rampen und dgl. Laufwege zu bilden.

Daneben kann das Bodenelement nach der Erfindung auch als massives Bodenblech mit dreiseitig hochgebogenen Seitenrändern ausgebildet sein, das als solches den Gesamtabmessungen des Bodens oder eines Zwischenbodens entspricht und beispielsweise auf eine Holzbodenplatte mit einem geeigneten Kleber aufgeklebt oder mit einer Tragkonstruktion aus Metall verschweißt wird, sofern es selbst aus schweißfähigem Werkstoff besteht.

Als Werkstoff für das Bodenelement nach der Erfindung kommt in erster Linie Metall, insbesondere Aluminium, aber auch nichtrostender oder verzinkter Stahl in Betracht, sofern es, wie hauptsächlich vorgesehen, im Viehtransportbereich, insbesondere zur Bodenausbildung bei Viehtransportern,Verwendung findet. Bei anderen, grundsätzlich ebenfalls möglichen Verwendungen, bei denen es auf eine oberflächige Trittsicherheit ankommt, z.B. beim Bodenbelag von Schwimm- oder Wasserbehandlungsbecken, können sich auch andere Werkstoffe wie Gummi oder Kautschuk, Kunststoff oder Keramik für das Bodenelement nach der Erfindung empfehlen.

Die Grundherstellung des erfindungsgemäßen Bodenelements bei seiner Ausbildung als selbsttragender Profilkörper aus Metall erfolgt zweckmäßig durch einen Strangpreßvorgang, während bei seiner Ausbildung als massives Bodenblech dieses in an sich bekannter Weise durch einen Walzvorgang gebildet wird. In beiden Fällen schließt sich ein Prägevorgang an, um die Oberflächenprofilierung in der die Trittfläche darbietenden Hauptebene des Bodenelements zu bilden. Bei anderen Werkstoffen finden andere geeignete werkstoffspezifische Herstellungsverfahren für das Bodenelement nach der Erfindung Anwendung.

Weitere Merkmale und Vorteile der Erfindung ergeben sich aus den Unteransprüchen und der nachstehenden Beschreibung in Verbindung mit der Zeichnung,
in der mehrere Ausführungsbeispiele des Gegenstands der Erfindung schematisch veranschaulicht sind.
In der Zeichnung zeigen:
- Fig. 1: eine Seitenansicht eines Bodenelements mit Oberflächenprofilierung nach einem ersten Ausführungsbeispiel der Erfindung,
- Fig. 2: eine Draufsicht auf einen Teil der Oberflächenprofilierung des Bodenelements gemäß Fig. 1,
- Fig. 3: einen Schnitt nach der Linie III-III der Fig. 2,
- Fig. 4: eine Draufsicht auf das Bodenelement gemäß den Figuren 1 bis 3 in verkleinertem Maßstab,
- Fig. 5: eine Draufsicht auf einen Teil der Oberflächenprofilierung eines Bodenelements nach einem weiteren Ausführungsbeispiel der Erfindung,
- Fig. 6: einen Schnitt nach der Linie VI-VI der Fig. 5,
- Fig. 7: eine Draufsicht auf ein weiteres-Ausführungsbeispiel eines Bodenelements nach der Erfindung in Form eines Bodenbleches,
- Fig. 8: eine Seitenansicht des Bodenbleches nach Fig. 7,
- Fig. 9: eine Vorderansicht des Bodenbleches nach den Fig. 7 und 8 und
- Fig. 10: eine Draufsicht auf einen Eckbereich des Bodenbleches nach den Fig. 7 bis 9 in gegenüber diesen vergrößertem Maßstab.

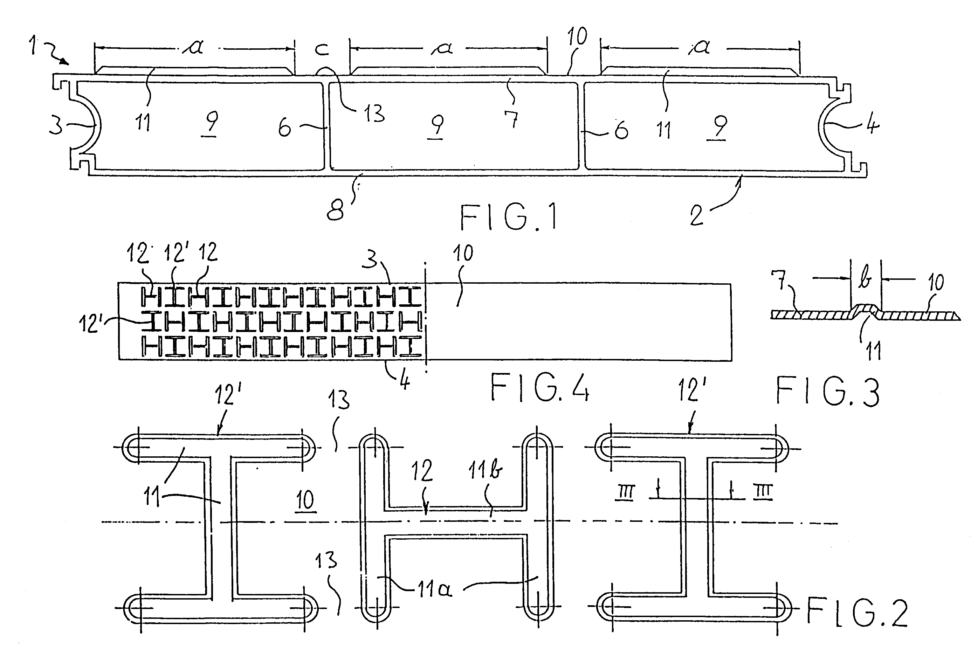

Das in den Figuren 1 bis 3 veranschaulichte, als Ganzes mit 1 bezeichnete Bodenelement ist als selbsttragender, nach dem Strangpreßverfahren hergestellter mehrkammeriger Hohlprofilkörper 2 aus einem geeigneten Metall, zum Beispiel Aluminium, ausgebildet. An seinen beiden Längsseitenrändern 3 und 4 ist der Hohlprofilkörper 2 jeweils mit einer profilausbildung für eine Verklammerung mit einem gleichartigen Profilkörper 2 versehen, um einen profilkörperverbund beispielsweise in der Größe des Bodens eines Viehtransporters zu bilden. Der Hohlprofilkörper 2 hat eine flache Ausbildung nach Art eines Paneels in einer Höhe von etwa 35 bis 45 mm, vorzugsweise 40 mm. Seine Länge kann vorteilhaft der Breite des Fahrzeugbodens und seine Breite einem Bruchteil der Bodenlänge entsprechen. Durch der versteifung dienende Zwischenstege 6 zwischen einer Oberwand 7 und einer Unterwand 8 sind zusammen mit den Längsseitenrändern 3 und 4 drei flache Kammern 9 im Hohlprofilkörper 2 ausgebildet. Die Unterwand 8 des Hohlprofilkörpers 2 dient als Auflage auf einer unteren Abstützungsfläche zur Bildung beispielsweise des genannten Fahrzeugbodens während die Oberwand 7 mit ihrer Oberfläche eine Trittfläche für Vieh, insbesondere Paarhufer, bildet.

Zur Erhöhung der Trittsicherheit der Tiere ist in der Trittfläche der Oberwand 7 eine Oberflächenprofilierung durch aus der Hauptebene 10 der Oberwand 7 nach außen ausgeprägte Profilleisten 11 geschaffen, die in aneinandergrenzenden Gruppen 12, 12' als Stege ausgebildet sind, die zwischen die beiden Zehen eines Paarhufers eingreifen können.
Jede Steggruppe 12, 12' ist von einer gleichen Anzahl von Profilleisten 11 gebildet, die rechtwinklig zueinander angeordnet sind. Bei dem dargestellten, bevorzugten Beispiel besteht jede Steggruppe 12, 12' aus drei Profilleisten 11, die H-profilförmig angeordnet sind.

Die Länge a der Profilleisten 11 liegt im Bereich von 40 bis 80 mm, wobei sich für die Außenstege 11a der H-profilförmigen Steggruppen 12, 12' eine Länge von etwa 75 mm als besonders vorteilhaft erwiesen hat. Als Breite b für die Profilleisten 11 hat sich ein Maß von etwa 10 bis 14 mm, vorzugsweise etwa 12 mm, als vorteilhaft erwiesen. Wie außerdem insbesondere der Figur 3 zu entnehmen ist, sind die Profilleisten 11 mit trapezförmigem Querschnitt aus der Hauptebene 10 der Oberwand 9 ausgeprägt. Dies ist seinerseits geeignet, die Oberflächenrutschsicherheit der Oberwand 7 weiter zu erhöhen, etwa im Vergleich zu einer steg- oder leistenförmigen Ausprägung mit kreisbogenförmigem Querschnitt. Vorteilhaft bilden in diesem Zusammenhang die Schrägwände des Trapezquerschntts einen spitzen Winkel von vorzugsweise etwa 45° zur Hauptebene 10 der Oberwand 7.

Wie insbesondere aus den Figuren 2 und 4 ersichtlich ist, bilden die Steggruppen 12, 12' parallele Reihen in der Weise, daß sie in jeder Reihe abwechselnd um 90° gedreht angeordnet sind. In benachbarten parallelen Reihen eines Bodenelements 1 sind die Steggruppen 12, 12' außerdem auf Versatz zueinander angeordnet, wie dies Fig. 4 veranschaulicht, in der ein Bodenelement 1 mit drei Längsreihen von Steggruppen 12, 12' (unter Beschränkung der Profilierungsdarstellung auf eine Elementenhälfte) gezeigt ist. Durch diesen Versatz der abwechselnd um 90° gedreht angeordneten Steggruppen 12, 12' ist eine Oberflächenprofilierung in Form eines H-I-Musters gebildet, das sich als besonders günstig für die Trittsicherheit von Paarhufern erwiesen hat.

Zwischen den aneinandergrenzenden Steggruppen 12, 12' sind Spülkanäle 13 belassen, die mit der Hauptebene 10 der Oberwand 7 fluchten. Die Breite c der Spülkanäle 13 beträgt etwa 10 bis 25 mm, vorzugsweise etwa 15 mm. Die Spülkanäle 13 ermöglichen ein Durchtreten von Reinigungsflüssigkeit wie Wasser zwischen die Profilleisten 11 und gewährleisten so eine vollflächige Reinigung der Oberwand 7 insbesondere auch im Bereich ihrer von der Hauptebene 10 eingenommenen Oberfläche. Bei dem in der Zeichnung dargestellten Ausführungsbeispiel sind diese Spülkanale 13 auf einfache Weise dadurch gebildet, daß die benachbarten Steggruppen 12, 12' mit einem der Breite der Spülkanäle 13 entsprechenden Abstand voneinander angeordnet sind.

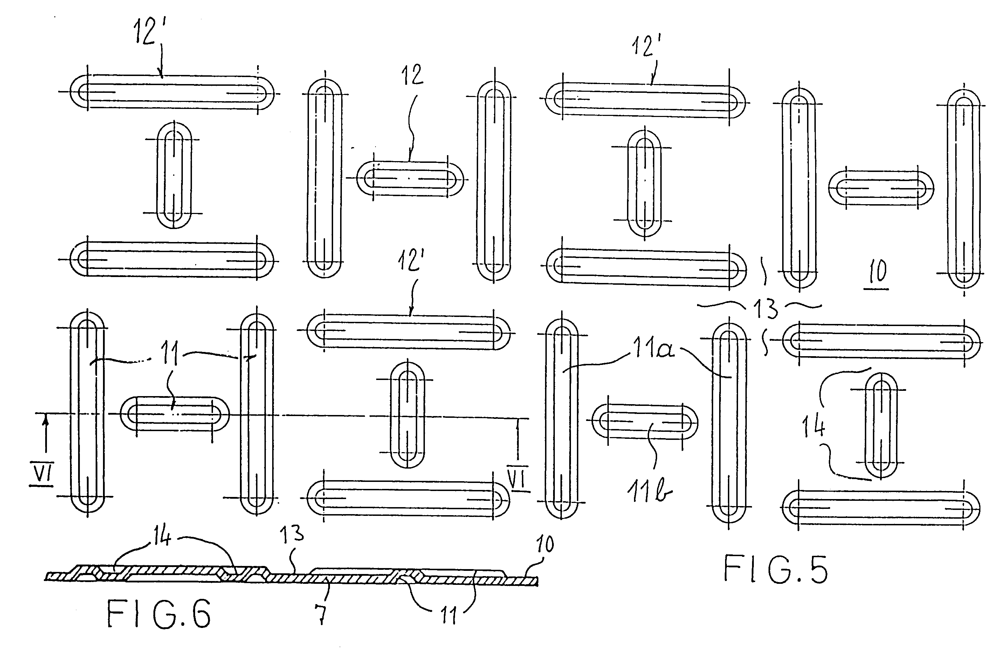

Während bei dem Ausführungsbeispiel gemäß den Figuren 1 bis 4 der Mittelsteg 11b des H-Profils an seinen beiden Enden jeweils einstückig in den angrenzenden Außensteg 11a des H-Profils einmündet, also eine Länge aufweist, die gegenüber der Länge der Außenstege 11a lediglich um das Maß b der Stegbreite verkürzt ist, veranschaulichen die Figuren 5 und 6 eine Abwandlung, bei der der Mittelsteg 11b des H-Profils in seiner Länge so weit verkürzt ist, daß zwischen seinen beiden Enden und dem angrenzenden Außensteg 11a des H-Profils jeweils ein weiterer, mit der Hauptebene 10 der Oberwand 9 des Profilkörpers 2 fluchtender Spülkanal 14 gebildet ist. Die Breite der Spülkanäle 14 ist etwas geringer als die der Spülkanäle 13 und liegt im Bereich von etwa 5 mm. Die zusätzlichen Spülkanäle 14 können die Oberflächenreinigung der Oberwand 7 im Bereich der Hauptebene 10 weiter begünstigen. Im übrigen entspricht die in den Figuren 5 und 6 veranschaulichte Abwandlung dem zuvor beschriebenen Ausführungsbeispiel.

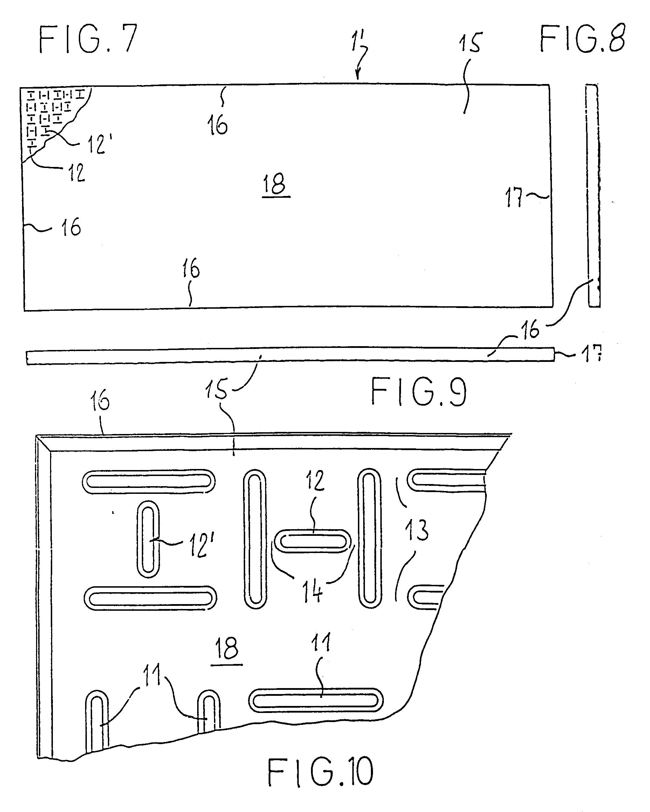

Die Figuren 7 bis 10 schließlich veranschaulichen ein Ausführungsbeispiel des Bodenelements 1' in Form eines massiven Bodenbleches 15 beispielsweise aus Aluminium, dessen Abmessungen denen der gesamten Fläche des Bodens eines Fahrzeugaufbaus eine Viehtransporters zuzüglich dreier Seitenränder 16 entsprechen, die hochgebogen sind, um an senkrechten Wänden des Fahrzeugaufbaus festgelegt zu werden. An dem-Ende 17, das im Einbauzustand des Bodenbleches 15 an die hintere Abschlußklappe des Fahrzeugaufbaus angrenzt, fehlt, wie üblich, ein solcher Seitenrand 16.

Wie es in dem linken oberen Eckbereich der Figur 7 und in der vergrößerten Darstellung gemäß Fig. 10 veranschaulicht ist, ist das Bodenblech 15 durchgehend mit parallelen Reihen auf Versatz zueinander angeordneter Steggruppen 12, 12' in einer Ausprägung gemäß dem Ausführungsbeispiel gemäß den Figuren 5 und 6 versehen, um das Bodenblech 15 in der gleichen Weise, wie es für den Hohlprofilkörper 2 dargelegt wurde, mit einer reinigungsfreundlichen, rutschsicheren Oberfläche 18 zu versehen. In Abhängigkeit von dem zu transportierenden Vieh kann ggf. der Abstand zwischen benachbarten parallelen Reihen der Steggrupen 12, 12', wie in Figur 10 angedeutet, gegenüber den Abständen zwischen den Steggruppen 12, 12' in jeder einzelnen Reihe der Steggruppen etwas vergrößert werden, womit eine weiter verbesserte Reinigung durch einen einfachen Spülvorgang erreicht werden kann.

## Patentansprüche

1. Bodenelement (1;1') mit einer Trittfläche für insbesondere Vieh wie Paarhufer, bei dem aus seiner oberflächig geschlossenen Hauptebene (10) eine Oberflächenprofilierung in Form winklig zueinander angeordneter Profilleisten (11) ausgeprägt ist, die aneinandergrenzende Steggruppen (12,12') bilden, zwischen denen mit der Hauptebene (10) des Bodenelements (1;1') fluchtende Spülkanäle (13) belassen sind, wobei jede Steggruppe (12,12') von einer gleichen Anzahl von Profilleisten (11) gebildet ist, **dadurch gekennzeichnet**, daß jede vollständige Steggruppe (12,12') drei Profilleisten (11) umfaßt und daß die Profilleisten (11) in jeder Steggruppe (12,12') rechtwinklig zueinander in der Form eines H-Profils angeordnet sind.

2. Bodenelement (1;1') nach Anspruch 1, dadurch gekennzeichnet, daß die Steggruppen (12,12') in parallelen Reihen angeordnet sind.

3. Bodenelement nach Anspruch 2, dadurch gekennzeichnet, daß die Steggruppen (12,12') in jeder Reihe abwechselnd um 90° gedreht angeordnet sind.

4. Bodenelement (1;1') nach Anspruch 2 oder 3, dadurch gekennzeichnet, daß die Steggruppen (12,12') in den benachbarten parallelen Reihen auf Versatz zueinander angeordnet sind.

5. Bodenelement (1;1') nach einem der Ansprüche 1 bis 4, dadurch gekennzeichnet, daß die Länge (a) der Profilleisten (11) etwa 40 bis 80 mm und ihre Breite (b) etwa 10 bis 14 mm beträgt.

6. Bodenelement (1;1') nach einem der Ansprüche 1 bis 5, dadurch gekennzeichnet, daß die Profilleisten (11) mit trapezförmigem Querschnitt aus der Hauptebene (10) ausgeprägt sind.

7. Bodenelement (1;1') nach einem der Ansprüche 1 bis 6, dadurch gekennzeichnet, daß der Mittelsteg (11b) des H-Profils an seinen beiden Enden jeweils einstückig in den angrenzenden Außensteg (11a) des H-Profils einmündet.

8. Bodenelement (1;1') nach einem der Ansprüche 1 bis 6, dadurch gekennzeichnet, daß der Mittelsteg (11b) des H-Profils in seiner Länge so weit verkürzt ist, daß zwischen seinen beiden Enden und dem angrenzenden Außensteg (11a) des H-Profils jeweils ein weiterer, mit der Hauptebene (10) fluchtender Spülkanal gebildet ist.

9. Bodenelement (1;1') nach einem der Ansprüche 1 bis 8, dadurch gekennzeichnet, daß die Breite der Spülkanäle (13,14) etwa 5 bis 25 mm, vorzugsweise etwa 10 bis 15 mm, beträgt.

10. Bodenelement (1) nach einem der Ansprüche 1 bis 9, dadurch gekennzeichnet, daß es als selbsttragender Profilkörper, insbesondere als flacher, vorzugsweise mehrkammeriger Hohlprofilkorper (2), aus Metall ausgebildet ist, der an zumindest einem Seitenrand (3,4) eine Profilausbildung für eine Verklammerung mit einem gleichartigen Profilkörper zur Bildung eines Profilkörperverbundes aufweist.

11. Bodenelement (1') nach einem der Ansprüche 1 bis 9, dadurch gekennzeichnet, daß es als massives Bodenblech (15) ausgebildet ist.

## Claims

1. A flooring element (1, 1') with a tread area, particularly for livestock such as cloven-hoofed animals, in which a surface profiling in the form of profiled strips (11) disposed at angles to one another is stamped out of the main plane (10) the surface of which is closed, the profiled strips forming a mutually adjacent groups of webs (12, 12') between which flushing channels (13) are left which are in line with the main plane (10) of the flooring element (1, 1'), each web group (12, 12') being formed by an equal number of profiled strips (11), characterised in that each complete web group (12, 12') comprises three profiled strips (11) and in that the profiled strips (11) in each web group (12, 12') are disposed at right-angles to one another in the form of an H-profile.

2. A flooring element (1, 1') according to claim 1, characterised in that the web groups (12, 12') are disposed in parallel rows.

3. A flooring element according to claim 2, characterised in that the web groups (12, 12') in each row are rotated alternately through 90°.

4. A flooring element (1, 1') according to claim 2 or 3, characterised in that the web groups (12, 12') in the adjacent parallel rows are staggered in respect of one another.

5. A flooring element (1, 1') according to one of claims 1 to 4, characterised in that the length (a) of the profiled strips (11) amounts to about 40 to 80 mm and in that their width (b) amounts to about 10 to 14 mm.

6. A flooring element (1, 1') according to one of claims 1 to 5, characterised in that the profiled strips (11) are stamped out of the main plane (10) with a trapezoidal section.

7. A flooring element (1, 1') according to one of claims 1 to 6, characterised in that the middle web (11b) of the H-profile merges at both ends integrally into the adjacent outer web (11a) of the H-profile.

8. A flooring element (1, 1') according to one of claims 1 to 6, characterised in that the middle web (11b) of the H-profile is sufficiently shortened in its length that between its two ends and the adjacent outer web (11a) of the H-profile there is in each case a further flushing channel which is aligned with the main plane (10).

9. A flooring element (1, 1') according to one of claims 1 to 8, characterised in that the width of the flushing channels (13, 14) amounts to about 5 to 25 mm and is preferably about 10 to 15 mm.

10. A flooring element (1) according to one of claims 1 to 9, characterised in that it is constructed from metal as a self-supporting profiled member, particularly as a flat, preferably multi-chamber hollow profiled member (2) which has at least on one lateral edge (3, 4) a profile construction for a clamping fitment to a like profiled member in order to form a composite assembly of profiled members.

11. A flooring element (1') according to one of claims 1 to 9, characterised in that it is constructed as a solid flooring sheet (15).

## Revendications

1. Elément de plancher (1; 1') comprenant un plan de marche pour bétail, en particulier pour artiodactyles, dans le cas duquel un profilage superficiel est obtenu par emboutissage hors de son plan principal (10) à surface imperforée et se présente sous la forme de nervures profilées (11) disposées à angle les unes par rapport aux autres et formant des groupes de nervures (12, 12') adjacents, entre lesquels subsistent des passages d'écoulement (13) affleurant le plan principal (10) de l'élément de plancher (1; 1'), chaque groupe de nervures (12, 12') étant formé d'un nombre égal de nervures profilées (11), caractérisé en ce que chaque groupe complet de nervures (12, 12') comprend trois nervures profilées (11) et les nervures profilées (11) dans chaque groupe de nervures (12, 12') sont disposées à angle droit l'une par rapport à l'autre sous la forme d'un profil en forme de H.

2. Elément de plancher (1; 1') suivant la revendication 1, caractérisé en ce que les groupes de nervures (12, 12') sont disposés en rangées parallèles.

3. Elément de plancher suivant la revendication 2, caractérisé en ce qu'un groupe de nervures (12, 12') sur deux, dans chaque rangée, est tourné de 90°.

4. Elément de plancher (1; 1') suivant la revendication 2 ou 3, caractérisé en ce que les groupes de nervures (12, 12') dans les rangées parallèles voisines sont décalés mutuellement en quinconce.

5. Elément de plancher (1; 1') suivant l'une quelconque des revendications 1 à 4, caractérisé en ce que la longueur (a) des nervures profilées (11) atteint environ 40 à 80 mm et leur largeur (b) environ 10 à 14 mm.

6. Elément de plancher (1; 1') suivant l'une quelconque des revendications 1 à 5, caractérisé en ce que les nervures profilées (11) présentant une section transversale en forme de trapèze sont embouties hors du plan principal (10).

7. Elément de plancher (1; 1') suivant l'une quelconque des revendications 1 à 6, caractérisé en ce que la nervure centrale (11b) du profil en forme de H débouche au niveau de chacune de ses deux extrémités dans la nervure extérieure adjacente (11a) du profil en forme de H et ce, d'un seul tenant.

8. Elément de plancher (1; 1') suivant l'une quelconque des revendications 1 à 6, caractérisé en ce que la nervure centrale (11b) du profil en forme de H est raccourcie en longueur dans une mesure telle qu'entre ses deux extrémités et la nervure extérieure adjacente (11a) du profil en forme de H, soit formé chaque fois un autre passage d'écoulement affleurant le plan principal (10).

9. Elément de plancher (1; 1') suivant l'une quelconque des revendications 1 à 8, caractérisé en ce que la largeur des passages d'écoulement (13, 14) atteint environ 5 à 25 mm, de préférence environ 10 à 15 mm.

10. Elément de plancher (1) suivant l'une quelconque des revendications 1 à 9, caractérisé en ce qu'il est conçu comme un corps profilé autonome, en particulier comme un corps profilé creux (2) plat, de préférence à cavités multiples, en métal, présentant au niveau d'au moins un bord latéral (3, 4) un profilage permettant un assemblage emboîté avec un corps profilé de même type afin de former un ensemble de corps profilés.

11. Elément de plancher (1') suivant l'une quelconque des revendications 1 à 9, caractérisé en ce qu'il est conçu comme une tôle de plancher massive (15).
